# EUROPEAN PATENT SPECIFICATION

(11) **EP 3 582 625 B1**
(45) Date of publication and mention of the grant of the patent: **05.08.2026**
(21) Application number: 18704029.0
(22) Date of filing: 14.02.2018
(51) Int. Cl.: A23G 1/30, A23G 1/50

(54) **BINDER DEPOSITION PRINTING OF CHOCOLATE**
BINDEMITTELABSCHEIDUNGSDRUCKEN VON SCHOKOLADE
IMPRESSION DE CHOCOLAT PAR DÉPÔT DE LIANT

(30) Priority: 14.02.2017 EP 17156065
(43) Date of publication of application: 25.12.2019
(73) Proprietor: Chocoladefabriken Lindt & Sprüngli AG, 8802 Kilchberg (CH)
(72) Inventor: BRANDENBURG, Gabriele, 6464 BA Kerkrade (NL); KULSKI, Christopher, 52224 Stolberg (DE); LANGER, Janine, 52062 Aachen (DE)
(74) Representative: E. Blum & Co. AG
(86) International application number: PCT/EP2018/053690
(87) International publication number: WO 2018/149882

(56) References cited:
- EP-A1- 0 941 666
- EP-A2- 0 522 704
- WO-A1-02/087351
- WO-A1-2006/120380
- WO-A1-2008/141770
- WO-A1-2014/152491
- WO-A2-2009/068999
- WO-A2-96/17523
- JP-A- H08 205 773
- US-A- 5 433 962
- US-A- 5 709 903
- US-A1- 2008 260 918
- US-A1- 2012 237 665

## Description

The present invention relates to a chocolate powder comprising chocolate liquor and sugar, wherein the chocolate powder is particularly suitable for the use in binder deposition printing. The present invention likewise relates to the use of said chocolate powder in binder deposition printing. The present invention further relates to a product obtainable by a binder deposition printing process of aforementioned chocolate powder.

### Technical Background

3D printing is emerging as a new process to access a vast amount of products with different shapes, textures and applications. 3D printing (also called additive manufacturing) is a process to construct three dimensional objects by printing the desired materials in layers. Numerous different 3D printing methods have been developed in recent years, each with distinct advantages and disadvantages. Common 3D printing methods are extrusion printing, light polymerized printing, and powder bed printing, each of which can be further divided into specific subcategories.

During extrusion 3D printing, the desired material is melted and extruded though a nozzle to form a first layer. The material is allowed to cool and solidify and further material is extruded at predetermined positions through a nozzle to form a second layer.

Light polymerized printing functions by providing a thin layer of a liquid photopolymer. Specific locations of the layer are solidified by polymerization induced by e.g. ultraviolet light and the next liquid layer is then applied.

During powder bed 3D printing, a uniform, powdered layer is provided. The layer is then attached (or glued) at specific locations to a next powdered layer and the 3D figure is constructed layer by layer. The attachment of the subsequent layer at specific locations is performed by either adding a liquid binder or by heating the powder material at specific locations with e.g. a laser to melt the material. In binder deposition printing, a powder material is deposited as a thin layer and a suitable binder is then applied to predetermined areas of the layer. Typically, a suitable printer head such as an inkjet printer head can be used for applying the binder at the appropriate positions/regions of the powder layer. Afterwards, a subsequent layer of powder material is added and the process is repeated until the last layer has been added. The 3D figure can then be removed from the loose remaining powder, which can be recycled for future use. If required, further finishing of the surface of the final 3D figure is performed. The 3D figure can be generated by computer aided design (CAD). The use of CAD allows for automated, rapid printing of complex and different 3D figures.

Whereas 3D printing was originally used predominantly for the manufacture of polymer materials, various improvements have led to the possibility to use different materials, such as ceramic materials, metals, metal alloys, and edible materials.

As one example for edible materials the recent international application WO 2016/113318 A1 (Katjes Fassin GmbH & Co. KG) describes a method for producing soft confectionary (candy) by 3D printing. Further consumable food products such as pizza, corn chips and even chocolates have also been printed using 3D printing methods. US2008/0260918 describes a powder binder process for the 3D printing of food.

EP 0941666 A1 relates to a low fat agglomerated chocolate having an average particle size up to 5mm and containing from 18 to 24% by weight fat based on the total weight of the chocolate.

US 2012/237665 A1 relates to a method of producing a heat resistant chocolate confectionery product.

WO 2014/152491 A1 relates to a method for creating a heat resistant confectionery product that includes incorporating one or more finely milled ingredients to a mixture containing a chocolate compatible fat.

WO 02/087351 A1 relates to the manufacture of good quality reduced fat chocolate.

WO 96/17523 A2 relates to a chocolate composition having a reduced fat content of typically 18 to 25 wt.%. The chocolate composition is produced by mixing (i) a major portion of a higher fat chocolate composition which has been flavour-developed, preferably by conching, with (ii) a minor proportion of a lower fat chocolate having a fat content below that required in the final chocolate composition, so as to produce the final reduced fat chocolate composition.

US 5709903 A relates to a lowfat confection comprising a chocolate of full fat texture.

WO 2006/120380 A1 relates to a chocolate composition with a fat content of less than 16 wt % total fat.

EP 0522704 A2 relates to a micromilled cocoa paste composition possessing improved food modifying properties for chocolate products which comprises hydrated microparticles of cocoa having a particle size of about 0.1 to about 20 microns.

WO 2008/141770 A1 relates to a process for preparing a reduced fat chocolate comprising the steps: (a) providing a powder comprising at least 15% by weight fat and at least 40% by weight of one or more particulate ingredients, wherein the fat at least partly coats at least a proportion of the one or more ingredients; (b) mixing the powder with one or more further ingredients to form a mixture comprising from 20 to 90% by weight of the powder; (c) refining the mixture; and (d) conching the refined mixture.

WO 2009/068999 A2 relates to a process for producing a chocolate or chocolate-like product comprising mixing together components of chocolate or chocolate-like product to give a flowable powder mixture, and feeding the flowable powder mixture to a roller compactor whereby the powder mixture is compressed to give the chocolate or chocolate- like product.

US 5433962 A relates to a flavored instant coffee product comprising a creamer base, a sweetener base, and a flavor base, wherein the creamer base is agglomerated to the sweetener base, and the flavor base is coated on the agglomerated creamer and sweetener bases, and wherein the flavor base comprises instant coffee and flavorings.

JP H08 205773 A relates to soluble powder chocolate. The preparing method of soluble power chocolate comprises adding 0.2-1.0wt.% surfactant to a chocolate, blending and then adding water so as the water content to be 11-25wt.% to obtain an emulsified material, drying by keeping material temperature at <=90 deg.C, pulverizing and adjusting the specific gravity to 0.35-0.55 and forming granules with <=5mm diameters.

Chocolate has mainly been printed using fused deposition modeling, which is a form of extrusion 3D printing. In this process the chocolate material is liquefied and extruded through a nozzle. The extruded chocolate is then cooled and thereby solidified and the next layer is subsequently added. However, this process requires that the chocolate material is solidified before the next layer is added. This makes the printing process time consuming. The printed liquid chocolate can be cooled to accelerate the solidification. However, cooling the chocolate by a cooling element is not energy efficient and still requires the chocolate to be cooled for a certain time period. Moreover, the chocolates printed using fused deposition modeling usually do not fulfill the requirements of the German regulation relating to cocoa and chocolate products (in the following referred to as German KakaoV 2003) of 15 December 2003, published in the Bundesgesetzblatt (German Federal Law Gazette) I, volume 63, page 2738 on 23 December 2003, which implements the EU directive 2000/36 of the European Parliament and the Council of 23 June 2000 as amended on 30 September 2008, published in the Bundesgesetzblatt (German Federal Law Gazette) I, volume 44, page 1911 on 10 October 2008. Thus, one object of the present invention is to provide a chocolate product printed by 3D printing, wherein the chocolate fulfills the requirements of the German KakaoV 2003.

Additionally, the manufacture of complex 3D figures may require the use of a support element during the printing process to avoid collapse of the fragile structure during the manufacturing process. The support element must be tailored to the specific 3D figure and is not recyclable. Additionally, the support element must be separated from the 3D figure after the 3D printing process, which can be time consuming and may leave an uneven surface at the attachment points to the 3D figure. Thus, a further object of the present invention is to provide a stable chocolate printed by a 3D printing process that is rapid and efficient and therefore does not require the use of a support structure during production/printing.

Generally, the manufacture of edible 3D structures by a binder deposition printing process is known. Binder deposition printing (also called binder jetting) is a form of powder bed 3D printing. Binder materials that are commonly used are water or edible oils. However, these binder materials may yield unsatisfactory results with regard to stability and consistency of edible products. Therefore, it was another object of the invention to provide a binder and a powder for deposition printing of chocolate that affords a stable product with good texture.

### Summary of the Invention

It has been found that chocolate can be printed by a 3D binder deposition printing process.

The present invention relates to a chocolate powder comprising sugar and chocolate liquor, wherein the particle size (D₉₄) of the chocolate powder is no more than about 100 µm, no more than about 80 µm, no more than about 60 µm, or no more than about 50 µm, preferably no more than about 50 µm.

The present invention further relates to a binder (currently not claimed) suitable for the use in binder deposition printing comprising chocolate liquor and cocoa butter.

The present invention further relates to the use of said binder (currently not claimed) in binder deposition printing of food products.

The present invention likewise relates to the use of said chocolate powder in binder deposition printing of food products.

The present invention further relates to a process for manufacturing a chocolate powder (currently not claimed) comprising the steps of
(i) providing a mixture comprising sugar and chocolate liquor;
(ii) milling the mixture; and
(iii) optionally sieving the mixture
to obtain a chocolate powder with a particle size (D₉₄) of no more than about 100 µm, no more than about 80 µm, no more than about 60 µm, or no more than about 50 µm, preferably no more than about 50 µm.

The present invention further relates to a product obtainable by binder deposition printing process by applying the aforementioned binder and chocolate powder.

### Detailed Description

The present invention is defined by the appended claims. The chocolate powder of the present inventions comprises chocolate liquor and sugar. The particle size of the chocolate powder is important to achieve a smooth surface of the layer during the printing process and convey a smooth texture of the chocolate. The chocolate powder comprises sugar and chocolate liquor, wherein the particle size (D₉₄) is no more than about 100 µm, no more than about 80 µm, no more than about 60 µm, or no more than about 50 µm, preferably no more than about 50 µm.

In one embodiment according to the invention, the chocolate powder comprises sugar and chocolate liquor, wherein the particle size (D₉₄) is from about 5 to about 100 µm, from about 10 to about 80 µm, from about 20 to about 60 µm, or from about 20 to about 50 µm, preferably from about 20 to about 50 µm.

The particle size of the chocolate powder may be determined by any suitable method known to the skilled person, such as light scattering. For example, the particle size may be determined using a Mastersizer 3000 (Malvern Instruments Ltd.) by laser diffraction.

In one embodiment according to the invention, the chocolate powder does not contain soy lecithin. In another embodiment according to the invention, the chocolate powder does not contain lecithin. In a further embodiment according to the invention, the chocolate powder does not contain corn starch. In yet another embodiment according to the invention, the chocolate powder does not contain (a) milk powder, (b) anhydrous milk fat, or (c) milk powder and anhydrous milk fat.

The chocolate powder can further comprise particles of different size distributions. This can be achieved by e.g. milling one part of the chocolate powder to fine particle size and the other part to a coarse particle size and the mixing those two.

In one embodiment according to the invention, the chocolate powder comprises fine particles and coarse particles, wherein the fine particles have a particle size (D₉₄) of from about 10 to about 30 µm and the coarse particles have a particle size (D₉₄) of from about 80 to about 100 µm. The chocolate powder may comprise any suitable mixture of those fine and coarse particles.

It is preferred that the particles of the chocolate powders have a spherical/spheroidal form.

In one embodiment according to the inventions, the particles of the chocolate powder have a spherical or spheroidal form. In one embodiment the spheroidal form requires that any of the three orthogonal radii does not vary from the others by more than 100 % based on the smallest radius of said particle.

Furthermore, the consistency and taste of the chocolate product can be altered and adjusted to the desired attribute by varying the size of the chocolate powder as well as varying the content of the sugar, fat, and water therein. The water content (or moisture content) of the chocolate powder is of particular importance and it has been found that the use of a chocolate powder with a low water content is preferred.

Additionally, it has been found that prolonged storage of the chocolate powder leads to an increase of the water content, probably due to the presence of hygroscopic sugar. This in turn leads to clumping of the powder and a larger particle size, which disrupts the smooth layering of the powder surface and results in a rough/coarse and/or inhomogeneous surface. The inhomogeneous/uneven surface of the powder layer leads to difficulties during the printing process. Thus, it is preferred to store the chocolate powder in a hermetically sealed container. Therefore, it has been found that chocolate powder with a low water content is advantageous, as an evenly smooth surface can be achieved as well as a good overall consistency of the chocolate product.

The chocolate powder has a water content of less than about 2.5 weight %, less than about 2 weight %, less than about 1 weight %, less than about 0.8 weight %, or less than about 0.7 weight %.

In another embodiment according to the invention, the chocolate powder has a water content of from about 0.01 to about 2.5 weight %, from about 0.01 to about 2 weight %, from about 0.01 to about 1 weight %, from about 0.01 to about 0.8 weight %, or from about 0.01 to about 0.7 weight %.

In one preferred embodiment, the chocolate powder has a water content of from about 0.01 to about 1 weight %.

Additionally, elevated temperatures during production or storage may lead to clumping of the chocolate powder particles. Thus, it is preferred to store the chocolate at a temperature, where no clumping or agglomeration occurs. In one embodiment according to the invention, the chocolate powder is stored at a temperature of below 22 °C, below 20 °C, or below 18 °C.

The weight ratio of sugar to chocolate liquor not only determines the sweetness and color of the chocolate powder, but also the ability of the chocolate powder surface layer to adhere to the next layer.

In one embodiment according to the invention, the chocolate powder has a weight ratio of chocolate liquor to sugar from about 10 : 90 to about 60 : 40, from about 20 : 80 to about 50 : 50, from 25 : 75 to about 45 : 55, or from about 30 : 70 to about 40 : 60, preferably from about 30 : 70 to about 40 : 60. In one preferred embodiment according to the invention, the chocolate powder has a weight ratio of chocolate liquor to sugar of from about 30 : 70 to about 40 : 60.

In another embodiment according to the invention, the chocolate powder has a weight ratio of chocolate liquor to sugar from about 10 : 90 to about 60 : 40, , preferably from about 20 : 80 to about 55 : 45, more preferably from about 20 : 80 to about 50 : 50, even more preferably from about 25 : 75 to about 50 : 50, still more preferably from about 30 : 70 to about 50 : 50, yet more preferably from about 35 : 65 to about 50 : 50, most preferably from about 40 : 60 to about 50 : 50.

Furthermore, it can be advantageous to add further stabilizers (or anticaking agents) that inhibit the formation of agglomerates or lumps. In one embodiment according to the invention, the chocolate powder further comprises an anticaking agent selected from the group consisting of tricalcium phosphate, corn starch, potato starch, magnesium stearate, sodium bicarbonate, and sodium aluminosilicate. In one preferred embodiment according to the invention, the chocolate powder further comprises corn starch and/or tricalcium phosphate.

The flavour of the chocolate powder can be tailored by the addition of additional flavours. In one embodiment according to the invention, the chocolate powder further comprises at least one flavour.

In one embodiment according to the invention, the chocolate powder further comprises at least one flavour in an amount of up to 3.0, 2.0, 1.0, or 0.5 weight % based on the total weight of the chocolate powder.

In one embodiment according to the invention, the chocolate powder further comprises at least one flavour as listed in the Part A of the Annex to Regulation EU No. 872/2008, in the version published in the Official Journal of the European Communities, L 267, Volume 55, dated 2 October 2012.

In one embodiment according to the invention, the chocolate powder further comprises at least one flavour selected from the group consisting of vanillin, piperonal, ethylvanilin, methylvanilin, α-amylcinnamaldehyde, cinnamaldehyde, anisylacetone, hydroxicitronellal, 6-methylcoumarin, piperonylisobutyrate, propenyl guaethol, vanilinacetate, benzaldehyde, diacetyl, isoamylacetate, ethylpropionate, limonene, allylhexanoate, ethylmaltol, and ethyl formate.

In one embodiment according to the invention, the chocolate powder further comprises at least one flavour selected from the group consisting of vanillin, piperonal, ethylvanilin, methylvanilin, α-amylcinnamaldehyde, cinnamaldehyde, benzaldehyde, and ethyl formate. In one embodiment according to the invention, the chocolate powder further comprises vanillin.

Additionally, the consistency, temperature resistance, melting properties, and taste of the chocolate powder can be changed by the addition of further vegetable fats.

In one embodiment according to the invention, the chocolate powder further comprises at least one vegetable fat. In one preferred embodiment according to the invention, the chocolate powder further comprises at least one vegetable fat selected from the group consisting of mango oil, palm oil, illipe oil, Shorea robusta seed oil, shea butter, and kokum oil.

In one embodiment according to the invention, the chocolate powder further comprises at least one emulsifier. In one preferred embodiment according to the invention, the chocolate powder further comprises at least one emulsifier selected from the group consisting of lecithin, sorbitan tristearate, and ammonium phosphatides.

The chocolate powder may comprise refined or unrefined sugar. The chocolate powder can comprise different sugars to adjust the calorific value of the chocolate and/or achieve a more dental friendly product.

In one embodiment according to the invention, the sugar in the chocolate powder is selected from the group consisting of glucose, fructose, galactose, ribose, sucrose, lactose maltose, isomaltose, trehalose, preferably sucrose.

In one preferred embodiment according to the invention, the sugar is powdered sugar (also called farinade).

In one preferred embodiment according to the invention, the sugar is crystalline sugar.

In one preferred embodiment according to the invention, the sugar in the chocolate powder is sucrose.

In one preferred embodiment according to the invention, the sugar in the chocolate powder is crystalline, powdered sucrose.

In one preferred embodiment according to the invention, the sugar in the chocolate powder is refined, crystalline sucrose.

In one preferred embodiment according to the invention, the chocolate powder does not comprise maltodextrin.

In one preferred embodiment according to the invention, the chocolate powder comprises powdered crystalline sucrose and chocolate liquor; wherein the weight ratio of chocolate liquor to powdered crystalline sucrose is from about 30 : 70 to about 40 : 60; and wherein the particle size (D₉₄) of the chocolate powder is not more than 50 µm.

In one preferred embodiment according to the invention, the chocolate powder comprises sucrose and chocolate liquor, wherein the weight ratio of chocolate liquor to sucrose is from about 30 : 70 to about 40 : 60, and wherein the particle size (D₉₄) is from about 20 µm to about 50 µm.

In one preferred embodiment according to the invention, the chocolate powder comprises crystalline sucrose and chocolate liquor, wherein the weight ratio of chocolate liquor to sucrose is from about 30 : 70 to about 40 : 60, and wherein the particle size (D₉₄) is from about 20 µm to about 50 µm, and wherein preferably the water content is from about 0.01 to about 1 weight %.

In a further preferred embodiment according to the invention, the chocolate powder comprises crystalline sucrose and chocolate liquor, wherein the weight ratio of chocolate liquor to sucrose is from about 30 : 70 to about 50 : 50, more preferably from about 35 : 65 to about 50 : 50, most preferably from about 40 : 60 to about 50 : 50, and wherein the particle size (D₉₄) is from about 20 µm to about 50 µm, and wherein preferably the water content is from about 0.01 to about 1 weight %.

In one embodiment according to the invention, the sugar in the chocolate powder may be at least partially replaced by a sugar alcohol selected from the group consisting of erythritol, xylitol, mannitol, sorbitol, inositol, volemitol, isomalt, maltitol, and lactitol.

In one embodiment according to the invention, 40 weight %, 60 weight %, 80 weight %, or 100 weight % of the sugar in the chocolate powder is replaced by a sugar alcohol.

The addition of artificial sweeteners can be beneficial for consumers which have blood sugar regulatory problems, such as diabetes mellitus.

In one embodiment according to the invention, the sugar in the chocolate powder may be at least partially replaced by an artificial sweetener, such as sodium cyclamate, saccharin, aspartame, sucralose, or stevia.

In one embodiment according to the invention, the sugar in the chocolate powder may be at least partially replaced by an artificial sweetener as listed in the Part B of the Annex II to Regulation EU No. 1129/2011, in the version published in the Official Journal of the European Communities, L 295, Volume 54, dated 12 November 2011.

In one embodiment according to the invention, 40 weight %, 60 weight %, 80 weight %, or 100 weight % of the sugar in the chocolate powder is replaced by an artificial sweetener.

In one embodiment according to the invention, the chocolate powder further comprises a coloring agent as listed in the Part B of the Annex II to Regulation EU No. 1129/2011, in the version published in the Official Journal of the European Communities, L 295, Volume 54, dated 12 November 2011.

In one embodiment according to the invention, the chocolate powder fulfills the requirements of chocolate as stipulated by the German KakaoV 2003. The

German KakaoV 2003 stipulates that chocolate is a product that contains not less than 35 % total dry cocoa solids, including not less than 18 % cocoa butter and not less than 14 % of dry non-fat cocoa solids. If animal fat and/or a preparation of animal fat is present in said chocolate, said animal fat and/or said preparation derives solely from milk and the amount of said animal fat and said preparation of animal fat is not more than 40 % of the total weight of the chocolate. If a vegetable fat other than cocoa butter is present in said chocolate, said vegetable fat is at least one vegetable fat selected from the group consisting of mango oil, palm oil, illipe oil, Shorea robusta seed oil, shea butter, and kokum oil, and the amount of said vegetable fat other than cocoa butter is not more than 5 weight % of the total weight of the chocolate after deduction of any added flavours and any animal fat and any preparation of animal fat. According to the German KakaoV, chocolate must not contain any ground cereal products or starches.

Additionally, the chocolate powder can be a milk chocolate powder, further comprising milk powder and/or milk fat.

In one embodiment according to the invention, the chocolate powder further comprises milk powder and/or milk fat.

In one embodiment according to the invention, the chocolate powder fulfills the requirements of a milk chocolate as stipulated by the German KakaoV 2003. The German KakaoV 2003 stipulates that milk chocolate is a product that contains
- not less than 25 % total dry cocoa solids,
- not less than 14 % dry milk solids obtained by partly or wholly dehydrating whole milk, semi- or full-skimmed milk, cream, or from partly or wholly dehydrated cream, butter or milk fat,
- not less than 2,5 % dry non-fat cocoa solids,
- not less than 3,5 % milk fat,
- not less than 25 % total fat (cocoa butter and milk fat).

If animal fat and/or a preparation of animal fat is present in said milk chocolate, said animal fat and/or said preparation derives solely from milk and the amount of said animal fat and said preparation of animal fat is not more than 40 % of the total weight of the milk chocolate. If a vegetable fat other than cocoa butter is present in said milk chocolate, said vegetable fat is at least one vegetable fat selected from the group consisting of mango oil, palm oil, illipe oil, Shorea robusta seed oil, shea butter, and kokum oil, and the amount of said vegetable fat other than cocoa butter is not more than 5 weight % of the total weight of the milk chocolate after deduction of any added flavours and any animal fat and any preparation of animal fat. According to the German KakaoV, milk chocolate must not contain any ground cereal products or starches.

In one embodiment according to the invention, the chocolate powder comprises at least 14 weight % milk powder.

In one embodiment according to the invention, the chocolate powder comprises from about 14 to about 30 weight % milk powder.

In one embodiment according to the invention, the chocolate powder further comprises malt extract. In one embodiment according to the invention, the chocolate powder further comprises 0 - 1.5 weight % malt extract.

The chocolate powder may comprise further ingredients derived from cocoa, such as cocoa nibs and/or cocoa butter. In one embodiment according to the invention, the chocolate powder further comprises cocoa butter. In one embodiment according to the invention, the chocolate powder further comprises from 0 to about 22 weight % cocoa butter. In one embodiment according to the invention, the chocolate powder further comprises from about 12 to about 20 weight % cocoa butter.

In one embodiment according to the invention, the chocolate powder further comprises milk powder and cocoa butter; and wherein the weight ratio of chocolate liquor to sugar is about 1 : 3 to about 1 : 6, preferably to about 1 : 4 to about 1 : 5; wherein the weight ratio of chocolate liquor to milk powder is from about 1 : 2 to about 1 : 4, preferably from about 1 : 2.25 to about 1 : 3.5.

In one preferred embodiment according to the invention, the chocolate powder comprises sucrose and chocolate liquor, wherein the weight ratio of sucrose to chocolate liquor is from about 1 : 2 to about 1 : 6, further comprising cocoa butter, milk powder, at least one flavour and/or malt extract.

In one preferred embodiment according to the invention, the chocolate powder comprises about 14 to about 30 weight % milk powder, about 0 to about 22 weight % cocoa butter, 5 to 15 weight % chocolate liquor, 40 to 50 weight % sucrose, at least one flavour, and 0 to about 1.5 weight % malt extract; wherein the particle size (D₉₄) is from about 20 to about 50 µm; and wherein the water content is from about 0.01 to about 1 weight %.

Further, the invention relates to a process for manufacturing a chocolate powder (currently not claimed) comprising the steps of
(i) providing a mixture comprising sugar and chocolate liquor;
(ii) milling the mixture; and
(iii) optionally sieving the mixture
to obtain a chocolate powder with a particle size (D₉₄) of no more than about 100 µm, no more than about 80 µm, no more than about 60 µm, or no more than about 50 µm, preferably no more than about 50 µm.

In one preferred embodiment according to the invention, the chocolate powder is milled to particle size (D₉₄) of from about 20 to about 50 µm in step (ii).

In one embodiment according to the invention, the chocolate powder does not contain soy lecithin. In another embodiment according to the invention, the chocolate powder does not contain lecithin. In a further embodiment according to the invention, the chocolate powder does not contain corn starch. In yet another embodiment according to the invention, the chocolate powder does not contain (a) milk powder, (b) anhydrous milk fat, or (c) milk powder and anhydrous milk fat.

The sugar of the mixture in step (i) can be premilled to powdered sugar in order to facilitate the milling process of step (ii) or can be provided unmilled, e.g. as granule retail sugar.

In one embodiment of the invention, the sugar of the mixture in step (i) is powdered sugar having a particle size (D₉₄) of from about 5 to about 100 µm, from about 10 to about 80 µm, from about 20 to about 60 µm, or from about 20 to about 50 µm.

In one embodiment of the invention, the sugar of the mixture in step (i) is powdered sugar having a particle size (D₉₄) of no more than about 100 µm, no more than about 80 µm, no more than about 60 µm, or no more than about 50 µm.

In one preferred embodiment according to the invention, the sugar of the mixture in step (i) is powdered, crystalline sucrose, wherein the particle size (D₉₄) of the sugar is from about 10 to about 90 µm.

Furthermore, the process can comprise an additional step (iii) of sieving the milled mixture.

In one embodiment according to the invention, the process for manufacturing a chocolate powder further comprises the process step (iii) of sieving the mixture.

In one embodiment according to the invention, step (iii) of the process for manufacturing a chocolate powder further comprises sieving the mixture using a mesh of up to 1000 µm, from about 40 to about 1000 µm, from about 200 to about 900 µm or from about 300 to about 650 µm. In one embodiment according to the invention, step (iii) of the process for manufacturing a chocolate powder is repeated with a mesh of varying size. The process step of sieving the mixture allows for a more uniform size of the particles and the separation from agglomerates which are too large in size for the intended purpose.

In one embodiment according to the invention, the sugar of the mixture in step (i) is selected from the group consisting of glucose, fructose, galactose, ribose, sucrose, lactose maltose, isomaltose, trehalose, preferably sucrose.

In one preferred embodiment according to the invention, the sugar is powdered sugar (also called farinade).

In one preferred embodiment according to the invention, the sugar of the mixture in step (i) is crystalline sugar.

In one preferred embodiment according to the invention, the sugar of mixture in step (i) is sucrose.

In one preferred embodiment according to the invention, the sugar of the mixture in step (i) is crystalline, powdered sucrose.

In one embodiment according to the invention, the sugar of the mixture in step (i) is crystalline sucrose.

In one preferred embodiment according to the invention, the sugar of the mixture in step (i) is refined, granulated, and crystalline sucrose, wherein the median particle size is from about 200 to about 1000 µm, from about 300 to about 800 µm, or from about 400 to about 600 µm.

It is important that the chocolate liquor and the sugar of the mixture in step (i) have a low water content. Chocolate liquor is partially hydrophobic and the water content will therefore generally not be particularly high. However, sugar, in particular powdered sucrose, is hydrophilic and will accumulate water from the air during the process and/or the storage, if not handled appropriately. It is therefore advantageous to store the sugar in a closed container. Furthermore, if premilled (powdered) sugar is used, it is advantageous to use the sugar as quickly as possible.

In one embodiment according to the invention, the sugar has a water content of no more than about 2.5 weight %, no more than about 2 weight %, no more than about 1 weight %, no more than about 0.8 weight %, or no more than about 0.5 weight %.

In one particularly preferred embodiment according to the invention, the sugar has a water content of about 0.06 weight %. In one particularly preferred embodiment according to the invention, the sugar has a water content of about 0.025 weight %.

In one embodiment according to the invention, the sugar has a water content of from about 0.01 to about 2.5 weight %, from about 0.01 to about 2 weight %, from about 0.01 to about 1 weight %, or from about 0.01 to about 0.8 weight %, from about 0.01 to about 0.5 weight %. In one preferred embodiment according to the invention, the sugar has a water content of from about 0.01 to about 0.5 weight %.

In one preferred embodiment according to the invention, the sugar is powdered sugar that has been made not more than 48 h, not more than 36 h, or not more than 24 h prior to use in the process.

By controlling the temperature of the process, the formation of agglomerates can be prevented. In one preferred embodiment according to the invention, the process is performed at a temperature of not more than 25 °C, not more than 22°C, not more than 20 °C, or not more than 18 °C. In one preferred embodiment according to the invention, the process is performed at a temperature of not more than 18 °C

In one embodiment according to the invention, the mixture of sugar and chocolate liquor can be milled in step (ii) with two rolling mills that rotate in opposite directions.

In one embodiment according to the invention, the milling of the mixture is performed by a mill, preferable a rolling mill.

In one preferred embodiment according to the invention, the two mills exert a pressure of at least 10 bar, at least 14 bar, at least 16 bar.

It may be required that the mixture is milled more than once to ensure a uniform size distribution.

In one embodiment according to the invention, the milling step is performed twice. In one preferred embodiment according to the invention, the mixture is milled at least twice by two rolling mills that rotate in opposing directions.

In one embodiment according to the invention, the mixture of step (i) is obtainable by mixing the chocolate liquor and sugar, preferably mixing the sugar and the chocolate liquor for at least about 30 min, at least about 45 min, or at least about 60 min

In one embodiment according to the invention, the mixture of step (i) further comprises at least one component selected from the group consisting of corn starch, tricalcium phosphate, flavours, and vegetable fats.

In one embodiment according to the invention, the mixture of step (i) further comprises milk powder and/or milk fat.

The binder of the present invention (currently not claimed) is a binder deposition printing binder comprising
(a) chocolate liquor and cocoa butter which may optionally be deodorized or refined, or
(b) deodorized cocoa butter, or
(c) refined cocoa butter, or
(d) aqueous ethanol containing ethanol in a concentration of 45 to 75 % by volume, preferably 50 to 70 % by volume, more preferably 55 to 65 % by volume, most preferably 58 to 62 % by volume.

When the binder comprises cocoa butter and chocolate liquor, it is preferred that the cocoa butter is deodorized or refined. In addition or as an alternative to deodorizing or refining, the cocoa butter can be filtered. Thus, not only off-flavours are removed, but also solid particles remaining from the manufacturing process. The filter means is not particularly limited and, for instance, a paper filter or a filter cloth can be used. Paper filters having a pore size of about 10 µm have been used, for instance.

It has been found that a binder comprising cocoa butter and at least one solid particle efficiently binds the chocolate powder, providing a uniform taste, texture and taste impression of the resulting product. The binder can be obtained by melting cocoa butter and mixing the cocoa butter with the solid particle to a homogenous liquid at an appropriate temperature, such as about 32 °C. It can be advantageous if the liquid binder comprises solid particles when applied to the powder layer. Such a heterogeneous mixture allows for facile variation of the composition of the binder, without the need to adjust the process parameters of the printing process, such as the temperature, because the solid particles will not influence the melting point of the liquid component. Furthermore, it has been found that binders comprising cocoa butter and solid particles when applied to the powder layer provide a more stable product.

It has further been found that a binder comprising cocoa butter and chocolate liquor efficiently binds the chocolate powder, providing a uniform taste, texture and taste impression of the resulting product. The binder can be obtained by melting cocoa butter and mixing the cocoa butter with chocolate liquor to a homogenous liquid at about 32 °C.

It has been found that a binder comprising at least two different components, such as cocoa butter and chocolate liquor, is particularly advantageous for varying and tuning the taste of the binder. Moreover it is been found that such a binder comprising at least two different components, such as cocoa butter and chocolate liquor, provides a more stable product.

In one embodiment according to the invention, the binder for binder deposition printing comprises cocoa butter.

In one embodiment according to the invention, the binder for binder deposition printing comprising cocoa butter and at least one further component, comprising solid particles.

In one embodiment according to the invention, the binder for binder deposition printing comprises chocolate liquor and cocoa butter.

In one embodiment, the binder comprising deodorized cocoa butter also comprises chocolate in order to adjust the flavour. For instance, bitter chocolate (i.e. chocolate having a content total dry cocoa solids of more than 41 weight %, preferably more than 50 weight %, more preferably more than 60 weight %, most preferably more than 70 weight %) can be present.

In one embodiment according to the invention, the binder is for binder deposition printing of food products.

In one embodiment according to the invention, the binder does not contain soy lecithin. In another embodiment according to the invention, the binder does not contain lecithin. In a further embodiment according to the invention, the binder does not contain corn starch. In yet another embodiment according to the invention, the binder does not contain (a) milk powder, (b) anhydrous milk fat, or (c) milk powder and anhydrous milk fat.

The binder is used to adhere one powder layer to the subsequent powder layer. Therefore, it is necessary that the binder is fluid or has fluid-like properties when applied to the powder layer.

It has been found that water as binder does not bind the chocolate powder in a reliant, homogeneous and satisfactory way. In contrast, the obtained product was brittle and not stable.

The binder is applied to the chocolate powder in primarily liquid form. Therefore, it may be required to heat the binder above the temperature at which the 3D printing process is performed. The binder of the present invention is preferably warmed to a temperature of 28 - 65 °C, such as to a temperature of temperature of 28 - 45 °C, which affords a liquid binder (viscosity smaller than 10⁴ mPa·s), or to a temperature of 55 - 65 °C or to a temperature of 60 - 65 °C. The liquid binder is then applied to a powder layer and a subsequent powder layer is added afterwards. The binder then cools to ambient temperature and solidifies, adhering the two powder layers. The binder should be liquid when applied to the powder layer. However, as mentioned above, it can be advantageous if the liquid binder contains further solid particles when applied to the powder layer. Such a heterogeneous mixture allows for facile variation of the composition of the binder, without the need to adjust process parameters, such as the temperature, because the solid particles will not influence the melting point of the liquid component. Furthermore, it has been found that binders comprising cocoa butter and solid particles when applied to the powder layer provide a more stable product.

In one embodiment according to the invention, the binder is warmed to a temperature of up to 30 °C, 32 °C, 35 °C, 40 °C, 55 °C, 60 °C or 65 °C before the binder is applied to the chocolate powder.

In one embodiment according to the invention, the binder comprises a liquid and a solid component when applied to the powder layer. In one embodiment according to the invention, the binder comprises liquid cocoa butter and solid chocolate liquor particles when applied to the powder layer. Cocoa butter usually is solid at room temperature. In order to liquefy cocoa butter, it can be heated and stored at a temperature of 40 °C or higher such as at a temperature of from 40-45 °C or at even higher temperatures such as 55-65 °C or 60-65 °C. In one embodiment according to the invention, the binder comprises a liquid and a solid component when applied to the powder layer, wherein the particle size of the solid component is smaller than about 1000, about 800, about 600, about 400, or 200 µm, preferably smaller than about 600 µm. In a more preferred embodiment according to the invention, the particle size of the solid component is no more than about 100 µm, yet more preferred no more than about 80 µm, still more preferred no more than about 60 µm, most preferred no more than about 50 µm.

In one embodiment according to the invention, the binder comprises chocolate liquor and cocoa butter, wherein the weight ratio of chocolate liquor to cocoa butter is from about 3 : 1 to about 1: 3, from about 2 :1 to about 1 : 2.

In one preferred embodiment according to the invention, the binder is suitable for the use in binder deposition 3D printing, comprising chocolate liquor and cocoa butter, wherein the weight ratio of chocolate liquor to cocoa butter is about 1.5 : 1.

Cocoa butter of Type V provides good melting properties of the chocolate, good gloss and texture and a less permeable barrier where the cocoa butter touches the surface of the chocolate, thereby increasing the shelf life.

In one embodiment according to the invention, the cocoa butter in the binder crystallizes in Type V crystals.

In one embodiment according to the invention, the binder has a viscosity of about 5 Pa·s or less, 1 Pa·s or less, 0,5 Pa·s or less or 0,1 Pa·s or less at 30 °C. In another embodiment according to the invention, the binder has a viscosity of about 10 Pa·s or less, 5 Pa·s or less, 1 Pa·s or less, 0,5 Pa·s or less or 0,1 Pa·s or less at 30 °C. at 40 °C.

In one embodiment according to the invention, the binder has a viscosity of about 0,05 Pa·s or less at 50 °C. In one embodiment according to the invention, the binder has a viscosity of about 0,04 Pa·s or less at 60 °C.

In one embodiment according to the invention, the binder has a yield value of less than about 20 Pa, less than about 15 Pa, less than about 10 Pa, less than about 5 Pa, or less than about 1 Pa. In one embodiment according to the invention, the binder has a yield value of about 0 to about 0.2 Pa.

The binder can further comprise at least one flavour and/ or at least one coloring additive.

In one embodiment according to the invention, the binder fulfills the requirements of chocolate or the requirements of milk chocolate as stipulated by the KakaoV 2003. These requirements have been set out hereinabove.

In another embodiment, the binder comprises aqueous ethanol containing ethanol in a concentration of 45 to 75 % by volume, preferably 50 to 70 % by volume, more preferably 55 to 65 % by volume, most preferably 58 to 62 % by volume.

By printing the chocolate with a binder deposition process instead of a fused deposition process, the chocolate can be printed faster and more energy efficient, as the liquid binder may solidify faster than the whole chocolate. Additionally, this method does not require an additional support element, which is non-recyclable. The structure is submersed in unbound powder during the whole process, thereby stabilized. The unbound powder can be recycled to be used in the future.

The product that is formed by binder deposition printing of the chocolate powder of the invention and the binder of the invention may comprise further edible components to enhance texture, flavour, or consistency.

In one embodiment according to the invention, the product formed does not contain soy lecithin. In another embodiment according to the invention, the product formed does not contain lecithin. In a further embodiment according to the invention, the product formed does not contain corn starch. In yet another embodiment according to the invention, the product formed does not contain (a) milk powder, (b) anhydrous milk fat, or (c) milk powder and anhydrous milk fat.

In one embodiment according to the invention, the product obtainable by a binder deposition printing process comprises at least one flavour.

In one embodiment according to the invention, the product obtainable by a binder deposition printing process comprises vanillin.

In one embodiment according to the invention, the product obtainable by a binder deposition printing process comprises lactose, milk powder, and/or milk fat.

In one embodiment according to the invention, the product obtainable by a binder deposition printing process comprises at least one vegetable fat selected from the group consisting of mango oil, palm oil, illipe oil, Shorea robusta seed oil, shea butter, and kokum oil.

In one embodiment according to the invention, the product obtainable by a binder deposition printing process comprises at least one emulsifier.

In one embodiment according to the invention, the product obtainable by a binder deposition printing process comprises at least one emulsifier selected from the list consisting of lecithin, sorbitan tristearate, and ammonium phosphatides.

In one embodiment according to the invention, the product obtainable by a binder deposition printing process fulfills the requirements of chocolate or milk chocolate as stipulated under the German KakaoV 2003. These requirements have been set out hereinabove.

In one embodiment according to the invention, the product obtainable by a binder deposition printing process does not comprise maltodextrin.

In one preferred embodiment according to the invention, the product is obtained by binder deposition printing of a chocolate powder,
wherein the chocolate powder comprises sugar and chocolate liquor; wherein the sugar is powdered crystalline sucrose;
wherein the weight ratio of chocolate liquor to powdered crystalline sucrose is from about 30 : 70 to about 40 : 60;
wherein the particle size (D₉₄) is from about 20 to about 50 µm; and wherein the water content is from about 0.01 to about 0.5 weight %
and a binder, wherein the binder comprises chocolate liquor and cocoa butter, wherein the weight ratio of chocolate liquor to cocoa butter is from about 1.6 : 1 to about 1 : 1.6.

The term "sugar" refers to mono-, di-, or polysaccharides, preferably in the natural occurring D-configuration. Non-limiting examples of monosaccharides comprise glucose, fructose, galactose, mannose, and ribose. Non-limiting examples of disaccharides comprise sucrose, lactose, maltose, isomaltose, and trehalose. The sugar can be a refined or unrefined sugar. Additionally, the sugar may be in granulated or powdered form and in a crystalline and/or amorphous form.

"Chocolate liquor" (also "cocoa liquor" or "cocoa mass") is obtained by fermenting, drying, roasting and crushing cocoa beans ( *Theobroma cacao*) to obtain cocoa nibs. These cocoa nibs are then milled to afford chocolate liquor. The weight % of fat (cocoa butter) in common chocolate liquors is around 50 - 60 %.

"Cocoa butter" is part of chocolate liquor and is obtained by pressing it out of chocolate liquor. Cocoa butter can be deodorized in order to remove off-flavours. Likewise, cocoa butter can be refined in order to remove off-flavours. Alternatively or in addition to deodorizing or refining, cocoa butter can be filtered in order to remove fine particles remaining from the manufacturing process. The main ingredients of cocoa butter comprise the fatty acids stearic acid, oleic acid, palmitic acid, and linoleic acid. Cocoa butter can solidify in a Type I, Type II, Type II, Type IV, Type V, or Type VI crystal structure. Among other attributes, the different crystal structures of cocoa butter have different melting points of around 17 °C (Type I), 23 °C (Type II), 26 °C (Type III), 28 °C (Type IV), 34 °C (Type V), and 36 °C (Type VI). Type V crystals are the preferred crystals for consumer chocolate. Type V cocoa butter is desirable in terms of its firm and stable texture, good snap and a melting point slightly below body temperature. Cocoa butter of Types I to IV melts too easily and has a poor snap. Cocoa butter of Type V is more solid and takes a long duration to form.

The term "chocolate" refers to any product comprising sugar, cocoa butter and chocolate liquor. The KakaoV 2003 sets out a stricter definition for chocolate. According to the German KakaoV 2003 which implements the EU directive 2000/36 of the European Parliament and the Council of 23 June 2000, a chocolate is required to fulfill certain requirements. Most importantly, a chocolate must contain at least 35 weight % of total dry cocoa solids, including at least 18 % cocoa butter and at least 14 % dry non-fat cocoa solids. If animal fat and/or a preparation of animal fat is present in said chocolate, said animal fat and/or said preparation derives solely from milk and the amount of said animal fat and said preparation of animal fat is not more than 40 % of the total weight of the chocolate. If a vegetable fat other than cocoa butter is present in said chocolate, said vegetable fat is at least one vegetable fat selected from the group consisting of mango oil, palm oil, illipe oil, Shorea robusta seed oil, shea butter, and kokum oil, and the amount of said vegetable fat other than cocoa butter is not more than 5 weight % of the total weight of the chocolate after deduction of any added flavours and any animal fat and any preparation of animal fat. According to the German KakaoV, chocolate must not contain any ground cereal products or starches.

Similarly, a milk chocolate must contain at least 25 weight % of total dry cocoa solids, at least 14 % dry milk solids, at least 2.5 weight % dry non-fat cocoa solids, at least 3.5 weight % milk fat and at least 25 % total fat. If animal fat and/or a preparation of animal fat is present in said milk chocolate, said animal fat and/or said preparation derives solely from milk and the amount of said animal fat and said preparation of animal fat is not more than 40 % of the total weight of the milk chocolate. If a vegetable fat other than cocoa butter is present in said milk chocolate, said vegetable fat is at least one vegetable fat selected from the group consisting of mango oil, palm oil, illipe oil, Shorea robusta seed oil, shea butter, and kokum oil, and the amount of said vegetable fat other than cocoa butter is not more than 5 weight % of the total weight of the milk chocolate after deduction of any added flavours and any animal fat and any preparation of animal fat. According to the German KakaoV, milk chocolate must not contain any ground cereal products or starches.

The term "particle size (D₉₄)" refers to the diameter of a particle distribution, wherein 94 vol. % of the particles have a smaller diameter. The D₉₄ particle size can e.g. be measured by laser diffraction or dynamic light scattering methods according to ISO 13320:1999. The particle size may be determined by laser diffraction using a Mastersizer 3000 (Malvern Instruments Ltd.).

The term "milling" as used herein refers to any process to decrease the particle size and should be understood to comprise for example rolling and/or grinding. Typically, ball mills or rolls are used to decrease the particle size.

The term "binder" refers to any substance that can be used to bind the powder during the binder deposition process. It is necessary that the binder is fluid or fluid-like when applied to the powder. If the binder is solid at ambient temperature, this can be achieved by warming the binder to a temperature above its melting point. However, it is possible that the binder is a heterogeneous mixture when applied to the powder and contains at least two components, wherein one component is fluid and another component is solid.

The term "about" in respect to a measurable unit refers to normal deviations of said measurable unit. Such deviations depend on the precision of the measuring apparatus or they depend on statistical deviations that are expected by the skilled person. It is to be understood that the term "about" means a deviation of ± 15 %, preferably ± 10 %, more preferably ± 5 %.

"Emulsifiers" are compounds that facilitate the heterogeneous mixing of two otherwise immiscible liquids, such as a lipophilic and a lipophobic fluid to form an emulsion. Emulsifiers are used in chocolates to provide the desired consistency and texture. Furthermore, emulsifiers may increase temperature and moisture sensitivity of the chocolate. Non-limiting examples are lecithin, mono-and diglycerides of fatty acids, sorbitan tristearate, and ammonium phosphatides.

Flavours are substances that have a distinct taste and/or smell and they may be of natural or artificial origin. Non-limiting examples of flavours comprise vanillin, piperonal, ethylvanilin, methylvanilin, α-amylcinnamaldehyde, cinnamaldehyde, anisylacetone, hydroxicitronellal, 6-methylcoumarin, piperonylisobutyrate, propenyl guaethol, vanilinacetate, benzaldehyde, diacetyl, isoamylacetate, ethyl propionate, limonene, allylhexanoate, ethylmaltol, and ethyl formate.

Coloring additives are edible artificial or natural compounds that impart the color of food. Non-limiting examples of coloring additives comprise carotenoids, lutein, turmeric, caramel, saffron, and paprika.

Fats are esters of glycerol. Vegetable fats are fats that are derived from plants. Non-limiting examples of vegetable fats are mango oil, palm oil, illipe oil, Shorea robusta seed oil, shea butter, and/or kokum oil. The terms "oil", "fat" and "butter" are often used as synonyms and are used in the context of this application as synonyms. In other contexts, the term "oil" can refer to glycerol esters that are liquid at a range of about 25 °C, whereas "fats" refer to glycerol esters that are solid at a range of about 25 °C and butter refers to milk fat.

The term "weight %" refers to the ratio of the mass of the respective component in relation to the sum of the mass of all components in percent. The term vol. % refers to the ratio of the volume of the respective component in relation to the sum of the volume of all components in percent.

The meaning of the term "comprising" is to be interpreted as encompassing all the specifically mentioned features as well optional, additional, unspecified ones, whereas the term "consisting of" only includes those features as specified. Therefore, "comprising" includes as a limiting case the composition specified by "consisting of".

### Experimental Part

All ingredients used in the manufacture of chocolate powder and binder, i.e. in particular any chocolate liquor and cocoa butter, were obtained from Chocoladefabriken Lindt & Sprüngli AG.

The particle size was determined using a Mastersizer 3000 (Mavern Instruments Ltd.) using a Helium- Neon Laser. For the measurement, Isopar G which contains 0.65 g / l lecithin was stirred at 2000 rounds per minute to remove air and the sample was dispersed in the Isopar G. The background was measured for 10 seconds and each sample was also measured for an interval of 10 seconds with a pre measurement delay of 50 seconds, a low obscuration limit of 20 and an upper obscuration limit of 30, a clean sequence type of "quick", and a laser intensity of above 75 %. The particle size was measured three times and the mean value was determined.

The viscosity of the binder was determined according to the IOCCC method of the year 2000 (International Office of Cocoa, Chocolate, and Sugar Confectionery, determination of the viscosity of Cocoa and Chocolate Products, in the final version dated April 27, 2000) using a viscometer having a measuring system with coaxial cylinders.

### 1. Process for obtaining a chocolate powder A

Crystalline sucrose was milled to obtain powdered, crystalline sucrose (farinade). The powdered sugar (water content of 0.06 weight % as determined by Karl-Fischer-Titration) was mixed within 24 h with chocolate liquor. The chocolate liquor (water content of 0.9 - 1.7 % as determined by IR spectroscopy) had a fat content of 51 % and a pH value of between 5.5 and 6.5. The two ingredients were mixed with an appropriate device (such as a N50CE mixer from Hobart Corporation) for 60 minutes at 18 °C in a weight ratio of powdered sucrose to chocolate liquor of 64 : 36. Subsequently, the mixture was milled in a Bühler-Laboratory mill using two rolling mills that rotate in opposite directions, thereby exerting a pressure of 18 bar. The mixture was milled a second time and then sieved through a 800 µm mesh. The particle size (D₉₄) was determined to be about 39.9 µm (σ = 0.7 µm). The chocolate powder was stored in an airtight, closed container at below 18 °C.

### 2. Process for obtaining chocolate powder B

The chocolate powder contains 54 weight % of crystalline sucrose and 46 weight % of chocolate liquor.

The ingredients were mixed in a horizontal mixer having a single shaft, rolled in a two-roll refiner, then rolled in a five-roll refiner and collected at the outlet of the five-roll refiner.

The chocolate powder had a particle size (D₉₄) of 31 µm.

### 3. Process for obtaining chocolate powder C

The chocolate powder contains 10 weight % of chocolate liquor, 21 weight % of cocoa butter, 42 % of sucrose, 25 weight % of dry milk (fat content 18 %), 0.38 weight % of dry malt extract, 0.05 of vanillin and 0.9 weight % of lecithin.

The chocolate powder was prepared in the same manner as chocolate powder B.

The chocolate powder had a particle size (D₉₄) of 23 µm.

### 4. Process for obtaining the binder

Deodorized cocoa butter was melted at 37 °C, warmed to 40 °C and mixed with chocolate liquor using and appropriate device (such as a C50CE Mixer from Hobart Corporation) to a homogenous liquid at about 32 °C. The viscosity of the binder was measured to be 0.10 Pa·s at 30 °C, 0.10 Pa·s at 40 °C, 0.05 Pa·s at 50 °C, and 0.04 Pa·s at 60 °C.

### 5. 3D Print

### General Procedure:

In a first step, a 0.625 mm thick layer of chocolate powder was provided in a binder printing apparatus. The apparatus comprised a powder supply chamber and a build platform. The chocolate powder was distributed to the build platform as a thin layer by rolling the chocolate powder from the supply chamber with a leveling roller. The binder was sprayed on the desired areas and a new layer of powdered chocolate was added. In case that the binder was solid at ambient temperature, the binder was molten beforehand. The building platform was lowered and the process is repeated until 16 layers were manufactured and the 3D figure was completed. The loose powder was then removed to afford the 3D figure.

### Experiment 1:

A product was provided using the chocolate powder A and water as binder. The formed product was brittle and not stable.

### Experiment 2:

A product was provided using the chocolate powder A and the binder consisting of cocoa butter and chocolate liquor as described under item 4, which was applied at about 32 °C. The product was stable and had a good texture.

### Experiment 3:

A product was provided using the chocolate powder B and the binder consisting of cocoa butter, which was applied at about 32 °C. The product was stable and had a good texture.

### Experiment 4:

A product was provided using the chocolate powder C and the binder consisting of cocoa butter, which was applied at about 32 °C. The product was stable and had a good texture.

## Claims

1. Chocolate powder comprising sugar and chocolate liquor, wherein the particle size (D₉₄) of the chocolate powder particles is no more than 100 µm; wherein the chocolate powder has a water content of less than 2.5 weight %, **characterized in that** the chocolate powder comprises
i) at least 35 weight % of total dry cocoa solids, including at least 18 % cocoa butter and at least 14 % dry non-fat cocoa solids; or
ii) at least 25 weight % of total dry cocoa solids, at least 14 % dry milk solids, at least 2.5 weight % dry non-fat cocoa solids, at least 3.5 weight % milk fat and at least 25 % total fat;
wherein, if a vegetable fat other than cocoa butter is present, said vegetable fat is at least one vegetable fat selected from the group consisting of mango oil, palm oil, illipe oil, Shorea robusta seed oil, shea butter, and kokum oil; wherein, if animal fat and/or a preparation of animal fat is present, said animal fat and/or said preparation derives solely from milk;
provided that the amount of said animal fat and said preparation of animal fat is not more than 40 % of the total weight of the chocolate powder; and provided that the amount of said vegetable fat other than cocoa butter is not more than 5 weight % of the total weight of the chocolate powder after deduction of any added flavours and any animal fat and any preparation of animal fat; and
provided that said chocolate powder does not contain any ground cereal product or starches.

2. The chocolate powder of claim 1, wherein
(i) the sugar is selected from the group consisting of glucose, fructose, galactose, ribose, sucrose, lactose maltose, isomaltose, and trehalose, preferably sucrose; and/or
(ii) the sugar is a powdered sugar; and/or
(iii) the sugar is crystalline powdered sucrose.

3. The chocolate powder of claim 1 or claim 2, wherein
(i) the weight ratio of chocolate liquor to sugar is from from 10 : 90 to 60 : 40, and/or
(ii) the particle size (D₉₄) is from 5 to 100 µm.

4. The chocolate powder of any one of claims 1 to 3, wherein
the sugar is powdered crystalline sucrose;
the weight ratio of chocolate liquor to powdered crystalline sucrose is from 30 : 70 to 40 : 60;
wherein the particle size (D₉₄) of the chocolate powder is not more than 50 µm.

5. The chocolate powder of any one of claims 1 to 4, further comprising milk powder and cocoa butter;
wherein the weight ratio of chocolate liquor to sucrose is 1 : 3 to 1 : 6;
wherein the weight ratio of chocolate liquor to milk powder is from 1 : 2 to 1 : 4.

6. Use of a chocolate powder as defined in any one of claims 1 to 5 in binder deposition printing of food products.

7. A product obtainable by a binder deposition printing process by applying a binder and the chocolate powder of any one of claims 1 to 5.

8. The product of claim 7, the binder comprising
(a) chocolate liquor and cocoa butter which may optionally be deodorized or refined, or
(b) deodorized cocoa butter, or
(c) refined cocoa butter, or
(d) aqueous ethanol containing ethanol in a concentration of 45 to 75 % by volume, preferably 50 to 70 % by volume, more preferably 55 to 65 % by volume, most preferably 58 to 62 % by volume.

9. The product of any one of claims 7 to 8, wherein, in the binder, the weight ratio of chocolate liquor to cocoa butter is from about 3 : 1 to about 1: 3, preferably from about 1.6 : 1 to about 1 : 1.6.

10. The product of any one of claims 7 to 9, wherein the viscosity of the binder is less than about 10 Pa·s at 40 °C, preferably less than about 0.40 Pa·s at 40 °C.

11. The product of any one of claims 7 to 10, **characterized in that** it comprises
(i) at least 35 weight % of total dry cocoa solids, including at least 18 % cocoa butter and at least 14 % dry non-fat cocoa solids;
or
(ii) at least 25 weight % of total dry cocoa solids, at least 14 % dry milk solids, at least 2.5 weight % dry non-fat cocoa solids, at least 3.5 weight % milk fat and at least 25 % total fat;
wherein, if a vegetable fat other than cocoa butter is present, said vegetable fat is at least one vegetable fat selected from the group consisting of mango oil, palm oil, illipe oil, Shorea robusta seed oil, shea butter, and kokum oil; wherein, if animal fat and/or a preparation of animal fat is present, said animal fat and/or said preparation derives solely from milk;
provided that the amount of said animal fat and said preparation of animal fat is not more than 40 % of the total weight of the product; and
provided that the amount of said vegetable fat other than cocoa butter is not more than 5 weight % of the total weight of the product after deduction of any added flavours and any animal fat and any preparation of animal fat; and
provided that said product does not contain any ground cereal product or starches;
wherein, preferably, the dry milk solids are obtainable by partly or wholly dehydrating whole milk, semi- or full-skimmed milk, cream, or from partly or wholly dehydrated cream, butter or milk fat.

## Patentansprüche

1. Schokoladenpulver, umfassend Zucker und Schokoladenmasse, wobei die Partikelgrösse (D₉₄) der Schokoladenpulverpartikel nicht mehr als 100 µm beträgt;
wobei das Schokoladenpulver einen Wassergehalt von weniger als 2,5 Gew.-% aufweist, **dadurch gekennzeichnet, dass** das Schokoladenpulver umfasst
i) mindestens 35 Gew.-% an gesamten trockenen Kakaofeststoffen, einschliesslich mindestens 18 % Kakaobutter und mindestens 14 % trockener fettfreier Kakaofeststoffe; oder
ii) mindestens 25 Gew.-% an gesamten trockenen Kakaofeststoffen, mindestens 14 % an trockenen Milchfeststoffen, mindestens 2,5 Gew.-% an trockenen fettfreien Kakaofeststoffen, mindestens 3,5 Gew.-% an Milchfett und mindestens 25 % an Gesamtfett;
wobei, falls ein anderes pflanzliches Fett als Kakaobutter vorhanden ist, dieses pflanzliche Fett mindestens ein pflanzliches Fett ist, das aus der Gruppe ausgewählt ist, die aus Mangoöl, Palmöl, Illipeöl, Shorea-robusta-Samenöl, Sheabutter und Kokumöl besteht;
wobei, falls tierisches Fett und/oder eine Zubereitung aus tierischem Fett vorhanden ist, das tierische Fett und/oder die Zubereitung ausschliesslich aus Milch stammt;
wobei die Menge des tierischen Fetts und der Zubereitung aus tierischem Fett nicht mehr als 40 % des Gesamtgewichts des Schokoladenpulvers beträgt; und
wobei die Menge des pflanzlichen Fetts, das keine Kakaobutter ist, nicht mehr als 5 Gew.-% des Gesamtgewichts des Schokoladenpulvers nach Abzug von etwaigen zugesetzten Aromastoffen sowie von etwaigem tierischem Fett und etwaigen Zubereitungen aus tierischem Fett beträgt; und wobei das Schokoladenpulver keine gemahlenen Getreideprodukte oder Stärken enthält.

2. Das Schokoladenpulver nach Anspruch 1, wobei
(i) der Zucker aus der Gruppe ausgewählt ist, die aus Glucose, Fructose, Galactose, Ribose, Saccharose, Lactose, Maltose, Isomaltose und Trehalose besteht, vorzugsweise Saccharose; und/oder
(ii) der Zucker ein Puderzucker ist; und/oder
(iii) der Zucker kristalline Saccharose in Pulverform ist.

3. Das Schokoladenpulver nach Anspruch 1 oder Anspruch 2, wobei
(i) das Gewichtsverhältnis von Kakaomasse zu Zucker zwischen 10 : 90 und 60 : 40 liegt, und/oder
(ii) die Partikelgrösse (D₉₄) zwischen 5 und 100 µm liegt.

4. Das Schokoladenpulver nach einem der Ansprüche 1 bis 3, wobei
der Zucker kristalline Saccharose in Pulverform ist;
das Gewichtsverhältnis von Schokoladenmasse zu kristalliner Saccharose in Pulverform 30 : 70 bis 40 : 60 beträgt;
wobei die Partikelgrösse (D₉₄) des Schokoladenpulvers nicht mehr als 50 µm beträgt.

5. Das Schokoladenpulver nach einem der Ansprüche 1 bis 4, ferner enthaltend Milchpulver und Kakaobutter;
wobei das Gewichtsverhältnis von Schokoladenmasse zu Saccharose 1 : 3 bis 1 : 6 beträgt;
wobei das Gewichtsverhältnis von Schokoladenmasse zu Milchpulver zwischen 1 : 2 und 1 : 4 beträgt.

6. Verwendung eines Schokoladenpulvers gemäss einem der Ansprüche 1 bis 5 beim Bindemittel-Abscheidungs-Druck von Lebensmitteln.

7. Ein Produkt, das durch ein Bindemittel-Abscheidungs-Druckverfahren erhältlich ist durch Aufbringen eines Bindemittels und des Schokoladenpulvers gemäss einem der Ansprüche 1 bis 5.

8. Das Produkt nach Anspruch 7, wobei das Bindemittel umfasst
(a) Schokoladenmasse und Kakaobutter, die gegebenenfalls desodoriert oder raffiniert sein können, oder
(b) desodorierte Kakaobutter, oder
(c) raffinierte Kakaobutter, oder
(d) wässrige Ethanol-Lösung, die Ethanol in einer Konzentration von 45 bis 75 Vol.-%, vorzugsweise 50 bis 70 Vol.-%, noch bevorzugter 55 bis 65 Vol.-% und am meisten bevorzugt 58 bis 62 Vol.-% enthält.

9. Produkt nach einem der Ansprüche 7 bis 8, wobei im Bindemittel das Gewichtsverhältnis von Kakaomasse zu Kakaobutter etwa 3 : 1 bis etwa 1 : 3, vorzugsweise etwa 1,6 : 1 bis etwa 1 : 1,6 beträgt.

10. Produkt nach einem der Ansprüche 7 bis 9, wobei die Viskosität des Bindemittels bei 40 °C weniger als etwa 10 Pa·s beträgt, vorzugsweise weniger als etwa 0,40 Pa·s.

11. Das Produkt nach einem der Ansprüche 7 bis 10, **dadurch gekennzeichnet, dass** es umfasst
(i) mindestens 35 Gew.-% an gesamten trockenen Kakaofeststoffen, einschliesslich mindestens 18 % Kakaobutter und mindestens 14 % trockener fettfreier Kakaofeststoffe;
oder
(ii) mindestens 25 Gew.-% an gesamten trockenen Kakaofeststoffen, mindestens 14 % an trockener Milchfeststoffen, mindestens 2,5 Gew.-% an trockenen fettfreien Kakaofeststoffen, mindestens 3,5 Gew.-% an Milchfett und mindestens 25 % an Gesamtfett;
wobei, falls ein anderes pflanzliches Fett als Kakaobutter vorhanden ist, dieses pflanzliche Fett mindestens ein pflanzliches Fett ist, das aus der Gruppe ausgewählt ist, die aus Mangoöl, Palmöl, Illipeöl, Shorea-robusta-Samenöl, Sheabutter und Kokumöl besteht;
wobei, falls tierisches Fett und/oder eine Zubereitung aus tierischem Fett vorhanden ist, das tierische Fett und/oder die Zubereitung ausschliesslich aus Milch stammt;
wobei die Menge des tierischen Fetts und der Zubereitung aus tierischem Fett nicht mehr als 40 % des Gesamtgewichts des Produkts beträgt; und wobei die Menge des pflanzlichen Fetts, das keine Kakaobutter ist, nicht mehr als 5 Gew.-% des Gesamtgewichts des Produkts nach Abzug von etwaigen zugesetzten Aromastoffen sowie von etwaigem tierischem Fett und etwaigen Zubereitungen aus tierischem Fett beträgt; und
wobei das Produkt keine gemahlenen Getreideprodukte oder Stärken enthält; wobei die trockenen Milchfeststoffe vorzugsweise durch teilweises oder vollständiges Entwässern von Vollmilch, teil- oder vollentrahmter Milch, Sahne oder aus teilweise oder vollständig entwässerter Sahne, Butter oder Milchfett erhältlich sind.

## Revendications

1. Poudre de chocolat comprenant du sucre et de la masse de cacao, dans laquelle la taille des particules (D₉₄) des particules de la poudre de chocolat n'est pas supérieure à 100 µm ; dans laquelle la poudre de chocolat a une teneur en eau inférieure à 2,5 % en poids, **caractérisée en ce que** la poudre de chocolat comprend :
i) au moins 35 % en poids de matière sèche totale de cacao, incluant au moins 18 % de beurre de cacao et au moins 14 % de matière sèche dégraissée de cacao ; ou
ii) au moins 25 % en poids de matière sèche totale de cacao, au moins 14 % de matière sèche issue du lait, au moins 2,5 % en poids de matière sèche dégraissée de cacao, au moins 3,5 % en poids de matière grasse du lait et au moins 25 % de matière grasse totale ;
dans laquelle, si une matière grasse végétale autre que le beurre de cacao est présente, ladite matière grasse végétale est au moins une matière grasse végétale choisie dans le groupe constitué de l'huile de mangue, de l'huile de palme, de l'huile d'illipé, de l'huile de graines de Shorea robusta, du beurre de karité et de l'huile de kokum ;
dans laquelle, si une matière grasse animale et/ou une préparation de matière grasse animale est présente, ladite matière grasse animale et/ou ladite préparation dérivent exclusivement du lait ;
à condition que la quantité de ladite matière grasse animale et de ladite préparation de matière grasse animale ne soit pas supérieure à 40 % du poids total de la poudre de chocolat ; et
à condition que la quantité de ladite matière grasse végétale autre que le beurre de cacao ne soit pas supérieure à 5 % en poids du poids total de la poudre de chocolat après déduction de tous arômes ajoutés, de toute matière grasse animale et de toute préparation à base de matière grasse animale ; et
à condition que ladite poudre de chocolat ne contienne aucun produit céréalier moulu ou d'amidons.

2. La poudre de chocolat selon la revendication 1, dans laquelle :
(i) le sucre est choisi dans le groupe constitué du glucose, du fructose, du galactose, du ribose, du saccharose, du lactose, du maltose, de l'isomaltose et du tréhalose, de préférence le saccharose ; et/ou
(ii) le sucre est un sucre en poudre ; et/ou
(iii) le sucre est du saccharose cristallin en poudre.

3. La poudre de chocolat selon la revendication 1 ou la revendication 2, dans laquelle :
(i) le rapport pondéral de la masse de cacao au sucre est de 10:90 à 60:40, et/ou
(ii) la taille des particules (D94) est de 5 à 100 µm.

4. La poudre de chocolat selon l'une quelconque des revendications 1 à 3, dans laquelle :
le sucre est du saccharose cristallin en poudre ; le rapport pondéral de la masse de cacao au saccharose cristallin en poudre est de 30:70 à 40:60 ;
la taille des particules (D₉₄) de la poudre de chocolat n'est pas supérieure à 50 µm.

5. La poudre de chocolat selon l'une quelconque des revendications 1 à 4, comprenant en outre du lait en poudre et du beurre de cacao ;
dans laquelle le rapport pondéral de la masse de cacao au saccharose est de 1:3 à 1:6 ;
dans laquelle le rapport pondéral de la masse de cacao au lait en poudre est de 1:2 à 1:4.

6. Utilisation d'une poudre de chocolat telle que définie dans l'une quelconque des revendications 1 à 5 dans l'impression par dépôt de liant de produits alimentaires.

7. Un produit susceptible d'être obtenu par un procédé d'impression par dépôt de liant en appliquant un liant et la poudre de chocolat selon l'une quelconque des revendications 1 à 5.

8. Le produit selon la revendication 7, le liant comprenant :
(a) de la masse de cacao et du beurre de cacao qui peuvent être éventuellement désodorisés ou raffinés, ou
(b) du beurre de cacao désodorisé, ou
(c) du beurre de cacao raffiné, ou
(d) de l'éthanol aqueux contenant de l'éthanol à une concentration de 45 à 75 % en volume, de préférence de 50 à 70 % en volume, de manière plus préférentielle de 55 à 65 % en volume, et de manière la plus préférentielle de 58 à 62 % en volume.

9. Le produit selon l'une quelconque des revendications 7 à 8, dans lequel, dans le liant, le rapport pondéral de la masse de cacao au beurre de cacao est d'environ 3:1 à environ 1:3, de préférence d'environ 1,6:1 à environ 1:1,6.

10. Le produit selon l'une quelconque des revendications 7 à 9, dans lequel la viscosité du liant est inférieure à environ 10 Pa·s à 40 °C, de préférence inférieure à environ 0,40 Pa·s à 40 °C.

11. Le produit selon l'une quelconque des revendications 7 à 10, **caractérisé en ce qu'**il comprend :
(i) au moins 35 % en poids de matière sèche totale de cacao, comprenant au moins 18 % de beurre de cacao et au moins 14 % de matière sèche dégraissée de cacao ; ou
(ii) au moins 25 % en poids de matière sèche totale de cacao, au moins 14 % de matière sèche issue du lait, au moins 2,5 % en poids de matière sèche dégraissée de cacao, au moins 3,5 % en poids de matière grasse du lait et au moins 25 % de matière grasse totale ;
dans lequel, si une matière grasse végétale autre que le beurre de cacao est présente, ladite matière grasse végétale est au moins une matière grasse végétale choisie dans le groupe constitué de l'huile de mangue, de l'huile de palme, de l'huile d'illipé, de l'huile de graines de Shorea robusta, du beurre de karité et de l'huile de kokum ;
dans lequel, si une matière grasse animale et/ou une préparation de matière grasse animale est présente, ladite matière grasse animale et/ou ladite préparation dérivent exclusivement du lait ;
à condition que la quantité de ladite matière grasse animale et de ladite préparation de matière grasse animale ne soit pas supérieure à 40 % du poids total du produit ; et
à condition que la quantité de ladite matière grasse végétale autre que le beurre de cacao ne soit pas supérieure à 5 % en poids du poids total du produit après déduction de tous arômes ajoutés, de toute matière grasse animale et de toute préparation à base de matière grasse animale ; et
à condition que ledit produit ne contienne aucun produit céréalier moulu ou d'amidons ;
dans lequel, de préférence, la matière sèche issue du lait est susceptible d'être obtenue par déshydratation partielle ou totale de lait entier, de lait partiellement ou totalement écrémé, de crème, ou à partir de crème partiellement ou totalement déshydratée, de beurre ou de matière grasse laitière.
